# EUROPÄISCHE PATENTSCHRIFT

(11) **EP 3 636 075 B1**
(45) Veröffentlichungstag und Bekanntmachung des Hinweises auf die Patenterteilung: **07.12.2022**
(21) Anmeldenummer: 19401038.5
(22) Anmeldetag: 27.09.2019
(51) Int. Cl.: A01M 7/00

(54) **LANDWIRTSCHAFTLICHE VERTEILMASCHINE UND VERFAHREN ZUR UNTERSUCHUNG EINES AUSBRINGELEMENTES**
AGRICULTURAL DISTRIBUTION MACHINE AND METHOD FOR EXAMINING A DISTRIBUTION ELEMENT
MACHINE DE DISTRIBUTION AGRICOLE ET PROCÉDÉ D'EXAMEN D'UN ÉLÉMENT D'ÉPANDAGE

(30) Priorität: 11.10.2018 DE 102018125152
(43) Veröffentlichungstag der Anmeldung: 15.04.2020
(73) Patentinhaber: Amazonen-Werke H. Dreyer SE & Co. KG, 49205 Hasbergen (DE)
(72) Erfinder: Trentmann, Markus, 49134 Wallenhorst (DE)

(56) Entgegenhaltungen:
- EP-A1- 3 235 379
- EP-A1- 3 248 463
- DE-A1-102016 109 406
- US-A1- 2006 265 106

## Beschreibung

Die Erfindung betrifft eine landwirtschaftliche Verteilmaschine gemäß dem Oberbegriff des Patentanspruches 1, sowie ein Verfahren zur Überwachung eines an einer landwirtschaftlichen Verteilmaschine angeordneten Ausbringelementes gemäß dem Oberbegriff des Patentanspruches 10.

Derartige Verteilmaschinen sind in US 2006/265106 A1, DE 10 2016 109406 A1, EP 3 248 463 A1 und EP 3 235 379 A1 offenbart.

Eine weitere landwirtschaftliche Verteilmaschine ist in US 5,927,603 A beschrieben. Diese Verteilmaschine ist als Bewässerungseinrichtung ausgeführt und weist ein lang gestrecktes Spritzgestänge auf. Das Spritzgestänge ist bei dieser Verteilmaschine an einem zentralen Ort mit einem stationären Vorratstank für Spritzflüssigkeit verbunden und über eine Vielzahl von Rädern dazu eingerichtet, sich um den stationären Vorratstank in kreisförmigen Bahnen über eine landwirtschaftliche Nutzfläche fortzubewegen.

Die Verteilmaschine umfasst weiter eine Fördereinrichtung für Spritzflüssigkeit und Schlauchleitungen, über welche an dem Spritzgestänge angeordnete Ausbringelemente mit dem Vorratstank verbunden sind. Die Spritzflüssigkeit steht somit unter Druck an einem Ventil des Ausbringelementes an. Durch Öffnen des Ventils tritt die Spritzflüssigkeit aus einer Düse des Ausbringelementes aus und trifft auf einen Prallteller, von wo aus sie sich verteilt. Die Ausbringelemente sind somit dazu eingerichtet, Spritzflüssigkeit in einem kegel- bzw. fächerförmigen Ausbringbereich auf der landwirtschaftlichen Nutzfläche auszubringen.

Um den ordnungsgemäßen Betrieb der Bewässerungseinrichtung zu überwachen, ist dem Ausbringelement ein Sensor zugeordnet. Der Sensor wird im Wesentlichen gebildet durch eine unter dem Prallteller angeordnete Druckfeder und einen elektrisch leitenden Aktuator. Der Prallteller ist auf der Druckfeder angeordnet, welche durch Auftreffen der Spritzflüssigkeit auf dem Prallteller komprimiert wird. Durch die Komprimierung der Druckfeder schließt sich ein Stromkreis zwischen dem Prallteller und dem Aktuator. Der so gebildete Sensor ist folglich dazu eingerichtet, die An- und Abwesenheit von auf den Prallteller auftreffender Spritzflüssigkeit zu detektieren.

Solange genug Spritzflüssigkeit auf den Prallteller auftrifft, um die Druckfeder zu komprimieren, schließt sich der Stromkreis durch den Kontakt zwischen Prallteller und Aktuator. Trifft keine oder nur sehr wenig Spritflüssigkeit auf den Prallteller auf, so wird die Druckfeder nicht ausreichend komprimiert und der Stromkreis bleibt offen. Eine mit dem zumindest einen Sensor verbundene Erfassungseinrichtung ist somit dazu eingerichtet, den Ausbringbereich des Ausbringelementes, welchem der Sensor zugeordnet ist, zu erfassen. Weiter kann die Erfassungseinrichtung anhand der Unterscheidung, ob der Stromkreis geschlossen oder offen ist, auswerten ob sich der Ausbringbereich ordnungsgemäß ausbildet oder nicht.

Nachteilig bei der vorgenannten Verteilmaschine ist, dass die Konzipierung des Sensors lediglich die Auswertung erlaubt, ob ein irgendwie gearteter Ausbringbereich ausgebildet wird oder nicht. Ausschlaggebend ist hierbei allein, ob genug Spritzflüssigkeit auf den Prallteller trifft, so dass die Druckfeder komprimiert und der Stromkreis geschlossen wird. Dieser Sensor nimmt somit für den gesamten betrachteten Ausbringbereich genau einen undifferenzierten Wert auf: Genügt die Kraft der auf den Prallteller auftreffenden Spritzflüssigkeit, um die Druckfeder zu komprimieren und den Stromkreis somit zu schließen - ja oder nein? Der Sensor detektiert folglich lediglich das Erreichen einer Schwelle, nicht aber die Werte zur Schwelle hin oder über die Schwelle hinaus.

Angesichts steigender gesetzlicher Umweltauflagen und dem Bestreben des Landwirts in der Spritzflüssigkeit gelöste Pflanzenschutzmittel möglichst effektiv und zielgerichtet auszubringen, erscheint die vorstehend beschriebene Verteilmaschine ungeeignet.

Die Aufgabe der vorliegenden Erfindung ist es, eine Verteilmaschine zu schaffen, welche eine verbesserte Betrachtung des Ausbringbereiches erlaubt.

Diese Aufgabe wird erfindungsgemäß durch eine Verteilmaschine mit den Merkmalen des Anspruchs 1 gelöst. Es ist vorgesehen, dass der zumindest eine Sensor dazu eingerichtet ist, über die Breite und/oder Tiefe des Ausbringbereichs zumindest zwei Werte zumindest einer den Ausbringbereich charakterisierenden Größe aufzunehmen.

Infolge dieser Maßnahme besteht die Möglichkeit den Ausbringbereich über seine Breite und/oder Tiefe differenziert zu betrachten. Die Aufnahme zweier Werte zumindest einer charakterisierenden Größe erlauben es diese untereinander und/oder beispielsweise mit Referenzwerten der gleichen Größe zu vergleichen. Der Ausbringbereich kann somit wesentlich genauer betrachtet werden, was dem Landwirt wiederrum erlaubt, die Verteilmaschine effektiver zu betreiben.

Das zumindest eine Ausbringelement kann eine Einfachdüse oder eine Mehrfachdüse sein, wie sie auf dem Gebiet der Pflanzenschutzspritzen geläufig sind. Der Ausbringbereich wird auch als sich unter dem Ausbringelement ausbildender Spritzfächer bezeichnet. Je nach Form und Ausprägung des Spritzfächers ergibt sich in welchem Maße die landwirtschaftliche Nutzfläche oder zumindest eine auf der landwirtschaftlichen Nutzfläche wachsende Pflanze bei Überfahrt der Verteilmaschine im Betrieb mit Spritzflüssigkeit benetzt wird. Die Ausprägung des Ausbringbereiches ist somit von besonderem Interesse, um die Verteilmaschine zielgerichtet zu betreiben. Die Erfassungseinrichtung kann ein Teil einer vorzugsweise auf einem die als Pflanzenschutzspritze ausgeführte landwirtschaftliche Verteilmaschine über eine landwirtschaftliche Nutzfläche verbringenden Ackerschlepper angeordneten Terminaleinheit sein. Die Erfassungseinrichtung kann Teil eines vorzugsweise an der landwirtschaftlichen Verteilmaschine angeordneten Jobrechners sein. Der Sensor weist vorzugsweise zumindest zwei Messelemente auf, um zumindest zwei Werte aufzunehmen. Die insbesondere als Pflanzenschutzspritze ausgebildete landwirtschaftliche Verteilmaschine kann als Anhänge- oder Anbaufeldspritze ausgeführt sein. Die landwirtschaftliche Verteilmaschine kann als selbstfahrende Pflanzenschutzspritze ausgeführt sein.

Erfindungsgemäß ist vorgesehen, dass die charakterisierende Größe eine Temperatur oder eine Temperaturdifferenz ist. Da sich die Temperatur der Spritzflüssigkeit von der Befüllung der landwirtschaftlichen Verteilmaschine bis hin zur Ausbringung auf der landwirtschaftlichen Nutzfläche zumindest nicht vollständig der Umgebungstemperatur anpasst, ist diese Größe zur besonders zuverlässigen Charakterisierung des Ausbringbereiches geeignet. Die Temperatur des Ausbringbereiches entspricht der der Spritzflüssigkeit, so dass dieser sich fehlerarm gegenüber der Umgebung erfassen lässt.

In einer weiteren besonders vorteilhaften Weiterbildung der Erfindung sind die zumindest zwei Werte Wärmestrahlungen. Besonders vorteilhaft ist hierbei, dass Wärmestrahlungen kontaktlos erfasst werden können. Infolge dieser Maßnahme kann der Sensor außerhalb des Ausbringbereiches angeordnet sein, so dass der Ausbringbereich durch Anwesenheit des Sensors unbeeinflusst bleibt. Dies ist erwünscht, damit sich ein gleichmäßiger Spritzfächer ausbilden kann.

In einer weiteren vorteilhaften Ausführungsform der Erfindung ist der zumindest eine Sensor als ein kontaktlos messender Infrarot-Array ausgebildet. Der Infrarot-Array weist eine Mehrzahl von Thermoelementen auf, die nebeneinander und/oder übereinander angeordnet sind. Jedes der Thermoelemente ist dazu eingerichtet, Wärmestrahlungen in einem Erfassungsbereich zu detektieren. Der Infrarot-Array ist somit über den sich aus den Erfassungsbereichen der Thermoelemente zusammensetzenden Aufnahmebereich dazu eingerichtet, zumindest zwei Werte über die Breite und/oder Tiefe des Ausbringbereichs aufzunehmen. Besonders vorteilhaft ist hierbei, dass der Infrarot-Array eine Mehrzahl von Werten aufnimmt und diese zumindest annährend genau geometrisch zuordbar sind, so dass eine differenzierte und detaillierte Betrachtung des Ausbringbereiches ermöglicht ist. Vorzugsweise nimmt der Infrarot-Array zumindest zwei Werte zeilenweise auf.

In einer weiteren vorteilhaften Weiterbildung der landwirtschaftlichen Verteilmaschine ist vorgesehen, dass der zumindest eine Sensor quer zur Hochachse des Ausbringbereichs beabstandet, auf den Ausbringbereich blickend, vorzugsweise an dem Spritzgestänge, angeordnet ist. Der Ausbringbereich bildet sich durch die Ausrichtung des Ausbringelementes und/oder die Erdbeschleunigung im Wesentlichen vom Spritzgestänge zum Boden hin aus. Die Hochachse des Ausbringbereiches steht folglich im Wesentlichen senkrecht zur Oberfläche der ebenen landwirtschaftlichen Nutzfläche. Durch die quer zur Hochachse beabstandete Anordnung des Sensors ist gewährleistet, dass der Ausbringbereich sich uneingeschränkt ausbilden kann. Vorzugsweise ist der Sensor horizontal, besonders vorzugsweise senkrecht zur Hochachse, auf den Ausbringbereich blickend angeordnet. Infolge dieser Maßnahme ist der Sensor dazu eingerichtet, eine nahezu unverzerrte Zeilenaufnahme des Ausbringbereiches aufzunehmen.

Um die in vortrefflicher Weise aufgenommenen Werte vorteilhaft weiterzuverarbeiten, ist in einer weiteren Weiterbildung der Erfindung vorgesehen, dass die Erfassungseinrichtung mittels eines in einem Speicher der Erfassungseinrichtung hinterlegten Auswerteprogramms anhand der aufgenommenen Werte dazu eingerichtet ist, den Zustand des den Werten zugeordneten Ausbringelementes festzustellen. In dem Auswerteprogramm können funktionale und/oder absolute und/oder erwartete Zusammenhänge zwischen den Messwerten eines Ausbringbereiches hinterlegt sein. Die Zusammenhänge können abhängig von der Ausführung des Ausbringelementes sein. Es ist denkbar, dass die aufgenommenen Werte über die Breite und/oder Tiefe des Ausbringbereiches in einem Diagramm aufgetragen eine Kurve mit charakteristischer Form ergeben. Das Auswerteprogramm kann dazu eingerichtet sein, die Ähnlichkeit der aufgenommenen Werte zu einer solchen charakteristischen Form auszuwerten und so den Zustand des den Werten zugeordneten Ausbringelementes festzustellen. Die ausgewertete Ähnlichkeit kann hierbei ein direktes oder indirektes Maß für den Zustand des Ausbringelementes sein. Anhand der Informationen über den Zustand der Ausbringelemente kann der ordnungsgemäße und zielgerichtete Betrieb der landwirtschaftlichen Verteilmaschine verbessert überwacht werden.

In einer weiteren vorteilhaften Weiterbildung der landwirtschaftlichen Verteilmaschine ist in einem Speicherelement der Erfassungseinrichtung zumindest eine, vorzugsweise ausbringelementspezifische, Referenzwertemenge abgelegt. In dieser Weiterbildung ist die Erfassungseinrichtung dazu eingerichtet, die zumindest zwei aufgenommenen Werte mit einer abgelegten Referenzwertemenge zu vergleichen und Abweichungen zwischen ermittelten Werten und Referenzwerten zur Feststellung des Zustands des zugeordneten Ausbringelementes auszuwerten. Es ist denkbar, dass mehrere Referenzwertemengen in dem Speicherelement abgelegt sind. Die mehreren Referenzwertemengen können sich hinsichtlich ihrer Eignung zur Feststellung des Zustands verschiedenartig ausgeführter Ausbringelemente unterscheiden. Weiter ist es denkbar, dass mehrere Referenzwertemengen für eine spezielle Art von Ausbringelement abgelegt sind. Diese können sich hinsichtlich des Zustands des Ausbringelementes für den sie von der Erfassungseinrichtung herangezogen werden unterscheiden, beispielsweise indem die Referenzwertemengen durch die Aufnahme des jeweiligen Ausbringelementes in unterschiedlichen Zuständen bereitgestellt werden. In dieser Weiterbildung ist die Erfassungseinrichtung in vortrefflich einfacher Weise dazu eingerichtet, von der Ähnlichkeit zwischen aufgenommenen Werten zu einer Referenzwertemenge eines bekannten Zustandes auf den tatsächlichen Zustand des Ausbringelementes zu schließen.

In einer weiteren besonders vorteilhaften Weiterbildung der landwirtschaftlichen Verteilmaschine ist vorgesehen, dass die Referenzwertemenge eine von einem Sensor aufgenommene Wertemenge eines sich an einem Ausbringelement im Neuzustand oder zumindest teilweise verschlissenen Zustand oder zumindest teilweise blockierten Zustand ausbildenden Ausbringbereiches ist. Die vorstehenden Zustände haben einen speziellen Einfluss auf die Ausprägung des Ausbringbereiches und sind daher für die zielgerichtete Ausbringung von Spritzflüssigkeit in besonderer Weise zu beachten. Der Verschleiß und die Blockade einer Düse können derart fortschreiten, dass eine Ausbringung aus der Düse verhindert wird. Infolge dieser Maßnahme ist die Erfassungseinrichtung dazu eingerichtet, das Fortschreiten dieser Zustände zu detektieren und den Benutzer rechtzeitig darüber zu informieren. Einer fehlerhaft ausbleibende Ausbringung aus einer verschlissenen und/oder blockierten Düse ist somit in besonders einfacher Weise vorgebeugt.

Die landwirtschaftliche Verteilmaschine ist ferner vorteilhaft dadurch weitergebildet, dass an dem Spritzgestänge eine Mehrzahl von Ausbringelementen mit zugeordneten Sensoren angeordnet ist, wobei die Erfassungseinrichtung dazu eingerichtet ist, die aufgenommenen Werte von zumindest zwei Ausbringelementen zu vergleichen und zur Feststellung des Zustands zumindest eines Ausbringelementes auszuwerten. Vorzugsweise ist die Erfassungseinrichtung dazu eingerichtet, die aufgenommenen Werte aller Ausbringelemente der landwirtschaftlichen Verteilmaschine zu vergleichen. Infolge dieser Maßnahme ist die Erfassungseinrichtung mit einer Möglichkeit geschaffen, einzelne Messwerte durch den Vergleich untereinander zu verifizieren und so zur zuverlässigen Feststellung des Zustands des Ausbringelementes dessen Werte verifiziert sind, zu nutzen. Die Erfassungseinrichtung ist somit dazu eingerichtet, zwischen lokal auftretenden oder global an allen Ausbringelementen aufgenommenen Anomalien zu unterscheiden. In zweckmäßiger Weise ist die Betrachtung des Ausbringbereiches so weiter verbessert.

In einer weiteren vorteilhaften Weiterbildung der Erfindung ist vorgesehen, dass in Blickrichtung des Sensors hinter dem Ausbringbereich eine Wärmequelle angeordnet ist. Sollte die Umgebungstemperatur zumindest annährend der Temperatur der Spritzflüssigkeit entsprechen, so ist infolge dieser Weiterbildung die Möglichkeit geschaffen, dennoch einen ausreichenden Kontrast für die Aufnahme von Messwerten zu schaffen. Die gemessene Umgebungstemperatur kann durch die hinter dem Ausbringbereich angeordnete Wärmequelle für die Betrachtung durch den Sensor künstlich angehoben werden, so dass eine Detektion mittels des vorstehenden Messprinzips ermöglicht und/oder erleichtert ist.

Die der Erfindung zugrunde liegende Aufgabe wird ferner durch ein Verfahren zur Überwachung von zumindest einem an einer landwirtschaftlichen Verteilmaschine angeordneten Ausbringelement im Betrieb, so dass sich ein Ausbringbereich unter dem Ausbringelement ausbildet, gelöst. Dieses Verfahren umfasst die Schritte des Erfassens eines Temperaturprofils über die Breite des Ausbringbereiches und der an den Ausbringbereich beidseitig zumindest annährend unmittelbar angrenzenden Bereiche, die zumindest annährend die halbe Breite des Ausbringbereiches aufweisen, mittels eines Infrarot-Arrays und des Auswertens des erfassten Temperaturprofils mittels eines in einem Speicher einer Erfassungseinrichtung hinterlegten Auswerteprogramms. Das Temperaturprofil eines Ausbringbereiches, sprich eine Mehrzahl von Temperaturwerten über die Breite des Ausbringbereiches, eignet sich als besonders robuste und charakteristische Größe zur Betrachtung und weiteren Auswertung. Besonders vorteilhaft ist, dass nicht nur der Ausbringbereich isoliert betrachtet wird, sondern auch die zumindest unmittelbar angrenzenden Bereiche mit aufgenommen werden, so dass ein Kontrast zwischen Ausbringbereich und Umgebung entsteht. Weiter vorteilhaft ist die kontaktlose Messung mittels eines Infrarot-Arrays, so dass der Ausbringbereich von der Messung unbeeinflusst bleibt.

Das erfindungsgemäße Verfahren wird ferner vorteilhaft dadurch weitergebildet, dass zum Auswerten des erfassten Temperaturprofils die folgenden Schritte ausgeführt werden: Bilden von Temperaturdifferenzen aus zwei vom Infrarot-Array erfassten Temperaturmesswerten, Umrechnen der gebildeten Temperaturdifferenzen auf jeweils eine zu der jeweiligen Temperaturdifferenz im Zusammenhang stehenden Ausbringmenge, Summieren der einzelnen Ausbringmengen über den erfassten Bereich und Analysieren der über den Bereich aufsummierten Ausbringmenge. Vorzugsweise werden die Temperaturdifferenzen zwischen einer vom Infrarot-Array erfassten Umgebungstemperatur und den über die Breite des Ausbringbereiches erfassten Temperaturen gebildet. Jede Temperaturdifferenz zwischen Umgebung und einer Stelle im Ausbringbereich dient anschließend als Maß für die Flüssigkeitsmenge an dieser Stelle. Je mehr Flüssigkeit sich im Moment der Aufnahme an der Stelle befindet, desto größer ist die zu erwartende Temperaturdifferenz. Dies bedingt sich daraus, dass für die Spritzflüssigkeit eine andere Temperatur angenommen wird als die Umgebungstemperatur, da die Spritzflüssigkeit in der Regel zu einem großen Teil aus einem Brunnen, größerem Gewässer oder ähnlichem entnommen wird. Über diesen Zusammenhang lassen sich die Temperaturdifferenzen in die Ausbringmenge umrechnen und anschließend für den erfassten Bereich aufsummieren. Die Ausbringmenge kann hierbei die tatsächliche Menge an Spritzflüssigkeit sein oder die Sprühdichte des Spritzfächers wiederspiegeln. Für ein untersuchtes Ausbringelement, welches zumindest annährend im Neuzustand ist, sollte sich so zumindest annährend das erwartete, für das Ausbringelement vom Hersteller angegebene Sprühbild ergeben.

In einer vorteilhaften Weiterbildung des Verfahrens ist vorgesehen, dass das Analysieren der über den Bereich aufsummierten Ausbringmenge zumindest das Untersuchen der aufsummierten Ausbringmengen auf Unregelmäßigkeiten, wie Sprünge und/oder Lücken, und/oder auf Symmetrie, und/oder auf einen stetigen Verlauf umfasst. Unregelmäßigkeiten wie Sprünge oder Lücken können hierbei ein Anzeichen für eine Teilblockade oder zumindest teilweise Verstopfung des Ausbringelementes sein. Ein stetiger Verlauf hingegen kann auf ein zumindest annährend voll funktionstüchtiges Ausbringelement hindeuten. Die Symmetrie kann je nach Anwendungsfall und Ausprägung entweder ein Indikator für Fehlunktionen oder für ordnungsgemäßen Betrieb sein und ist daher im Einzelfall differenziert zu betrachten.

Das erfindungsgemäße Verfahren wird ferner vorteilhaft dadurch weitergebildet, dass die Erfassungseinrichtung einem Benutzer der landwirtschaftlichen Verteilmaschine anhand der Ergebnisse der Untersuchungen den Zustand, wie Neuzustand oder zumindest teilweise verschlissener Zustand oder zumindest teilweise blockierter Zustand, des überwachten Ausbringelementes visuell und/oder akustisch mitteilt. Hierzu umfasst die Erfassungseinrichtung eine Anzeige und/oder Audiovorrichtung. Die Erfassungseinrichtung kann Teil einer Terminaleinheit sein. Infolge dieser Maßnahme werden die für den Benutzer relevanten Ergebnisse des Verfahrens in geeigneter Weise aufbereitet und zur Verfügung gestellt. Dem Benutzer ist es durch die zusätzliche Auskunft über den Zustand der Ausbringelemente möglich, die Instandhaltung der Selbigen vorausschauend zu planen, so dass Ausfallzeiten aufgrund von Fehlfunktionen zumindest annährend vollständig vermieden werden können.

Außerdem ist ein erfindungsgemäßes Verfahren vorteilhaft, bei welchem eine Mehrzahl von Ausbringelementen überwacht wird und die Untersuchungen der Ausbringelemente untereinander verglichen werden. Durch dieses Vorgehen können die Ergebnisse der Untersuchungen untereinander validiert werden.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene Pflanzenschutzspritze in perspektivischer Ansicht,
- Fig.2: ein Spritzgestänge der Pflanzenschutzspritze in Seitenansicht,
- Fig.3: ein Ausbringelement mit einem zugeordneten Sensor in Seitenansicht,
- Fig.4: das Ausbringelement mit Sensor, gemäß Fig.3, in Ansicht von hinten,
- Fig.5: das Ausbringelement mit Sensor, gemäß Fig.3, wobei das Ausbringelement zumindest teilweise blockiert ist, in Ansicht von hinten, und
- Fig.6: ein Temperaturprofil aufgetragen in einem Diagramm mit Temperatur T über x, und eine Ausbringmenge aufgetragen in einem Diagramm.

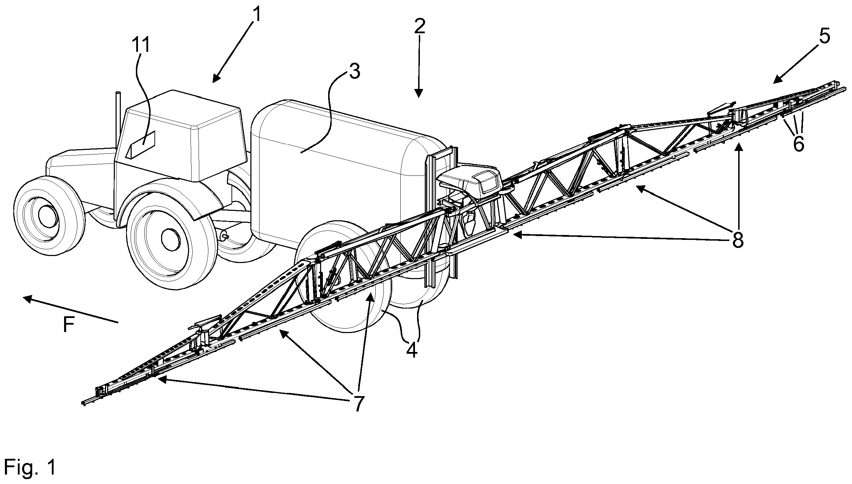

Ein Ackerschlepper 1 mit einer angehangenen, als Pflanzenschutzspritze 2 ausgeführten landwirtschaftlichen Verteilmaschine ist in Fig.1 zu sehen. Diese Pflanzenschutzspritze 2 weist einen Tank 3 zur Bevorratung von zu verspritzender Spritzflüssigkeit und eine Pumpeinrichtung zur Förderung derselben auf. Ein Paar Räder 4 dient in diesem Fall zur Abstützung der Pflanzenschutzspritze 2 auf dem Untergrund, wie beispielsweise einer landwirtschaftlichen Nutzfläche. Falls die landwirtschaftliche Verteilmaschine als angebaute Pflanzenschutzspritze 2 ausgeführt ist, können die Räder selbstverständlich entfallen bzw. im Falle einer selbstfahrenden Pflanzenschutzspritze 2 um ein weiteres Radpaar ergänzt werden.

Zur Ausbringung der Spritzflüssigkeit auf der landwirtschaftlichen Nutzfläche, ist an einem Spritzgestänge 5 der Pflanzenschutzspritze 2 eine Vielzahl von als Düsen 6 ausgeführten Ausbringelementen angeordnet. Das Spritzgestänge 5 besteht beidseitig quer zur Fahrtrichtung F aus mehreren Segmenten 7, die an mehreren Gelenken 8 zusammenklappbar ausgebildet sind.

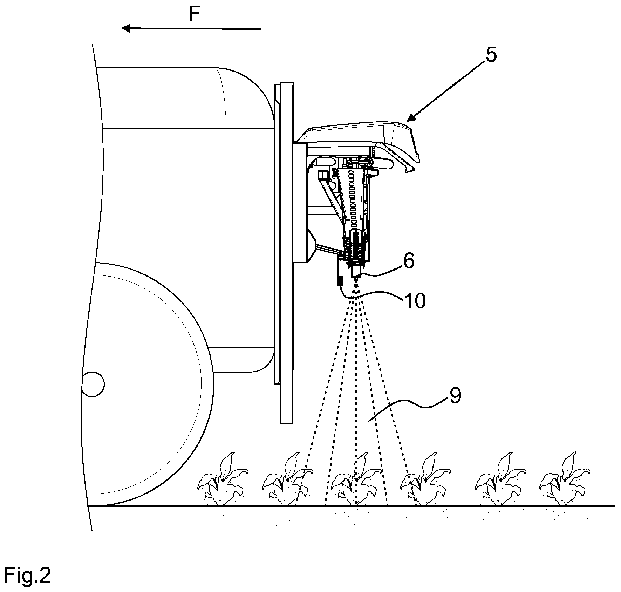

Über nicht näher dargestellte Flüssigkeitsleitungen wird die Spritzflüssigkeit mittels der Pumpeinrichtung aus dem Tank 3 zu den jeweiligen Düsen 6 transportiert. Ist ein der Düse 6 vorgeschaltetes Ventil geöffnet, so tritt die Spritzflüssigkeit in einem auch als Spritzfächer 9 bezeichneten kegel- bzw. fächerförmigen Ausbringbereich aus der Düse 6 aus und verteilt sich auf der landwirtschaftlichen Nutzfläche. In Fig.2 ist das Spritzgestänge 5 mit unter den aktivierten Düsen 6 ausgebildeten Spritzfächern 9 in Seitenansicht zu sehen.

Die Form und Ausprägung des Spritzfächers 9 ist hierbei primär durch die Düse 6 definiert. Der Zustand der Düse 6 hat somit maßgeblichen Einfluss auf die gewünschte Ausbildung des Spritzfächers 9. Auch der anliegende Flüssigkeitsdruck und die zu verspritzende Flüssigkeitsmenge pro Zeiteinheit haben Wirkung auf den Spritzfächer 9. Unterschiedliche Düsen 6 unterscheiden sich hinsichtlich der Aufweitung des Spritzfächers 9 in Fahrtrichtung F und/oder quer zur Fahrtrichtung F, sowie der Flüssigkeitsverteilung über die Breite quer zur Fahrtrichtung F und/oder Tiefe in Fahrtrichtung F des Spritzfächers 9. Die Summe aller von den Düsen 6 ausgebildeten Spritzfächer 9 ergibt das gewünschte Spritzbild für die Pflanzenschutzspritze 2 im Betrieb.

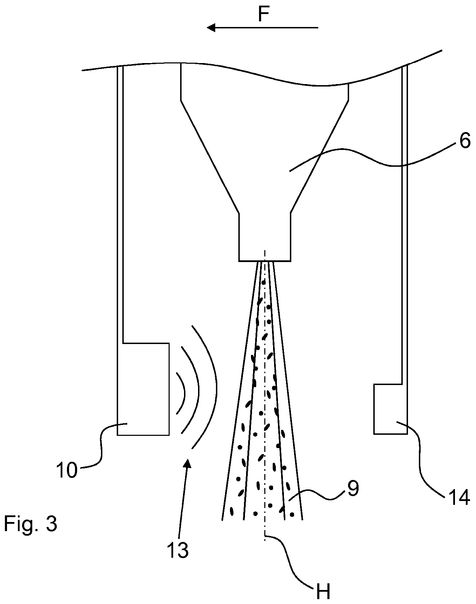

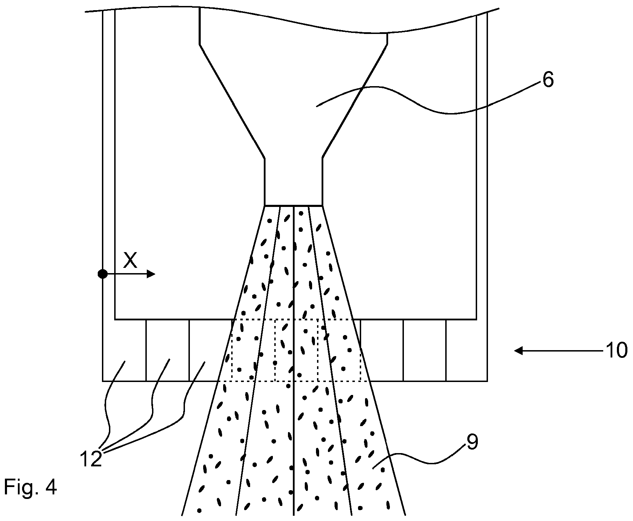

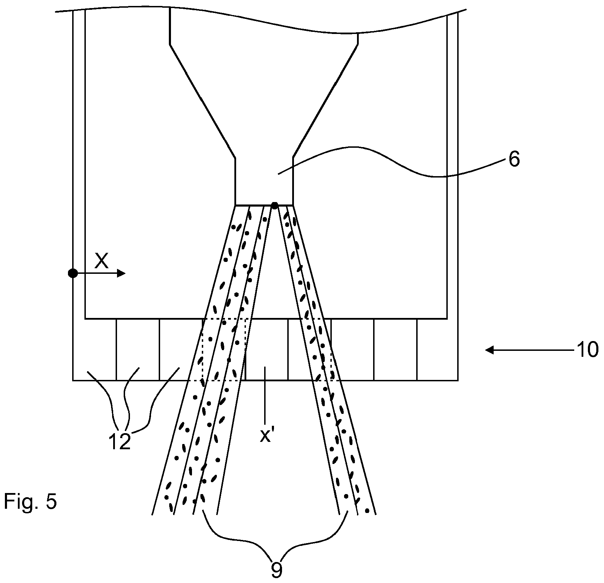

Hierbei ist vorausgesetzt, dass alle Düsen 6 den vorgesehenen Spritzfächer 9 ausbilden, sprich wie vorgesehen funktionieren. Beispielhaft ist in Fig.3 und 4 ein intakter Spritzfächer 9 gezeigt. Durch Benutzung der Düsen 6 können diese jedoch ihren Zustand verändern, genauer ausgedrückt verschleißen, verstopfen oder abbrechen, so dass die Ausbildung des Spritzfächers 9 beeinträchtigt wird bzw. sich verändert. Beispielhaft ist in Fig.5 ein defekter, in diesem Fall durch eine teilweise blockierte Düse entstehender, Spritzfächer 9 gezeigt. Durch die Blockade einzelner Bereiche der Düse 6, teilt sich die Spritzflüssigkeit stattdessen in einen rechten und linken Anteil des Spritzfächers 9 auf. In der Folge verändert sich das Spritzbild der Pflanzenschutzspritze 2, so dass die gewünschte Verteilung von Spritzflüssigkeit auf der landwirtschaftlichen Nutzfläche nicht mehr erreicht wird. Angesichts steigender Umweltauflagen und dem Bestreben des Landwirts in der Spritzflüssigkeit gelöste Pflanzenschutzmittel möglichst effektiv auszubringen, sind derartige Abweichungen möglichst zu vermeiden.

Erfindungsgemäß ist daher mit Hilfe als Infrarot-Array 10 ausgebildeter Sensoren eine Überwachung des Spritzfächers 9 vorgesehen. Der Infrarot-Array 10 ist mit einer Erfassungseinrichtung 11 zur Erfassung und Auswertung des Spritzfächers 9 verbunden und dazu eingerichtet, über die Breite und/oder Tiefe des Spritzfächers 9 mehrere Werte aufzunehmen. Die Erfassungseinrichtung 11 ist in diesem Fall Teil einer auf dem Ackerschlepper 1 angeordneten Terminaleinheit, welche als Informations- und/oder Bedienvorrichtung dient.

Die Infrarot-Arrays 10 bestehen aus einer Mehrzahl von Thermoelementen 12, die dazu in der Lage sind, kontaktlos Wärmestrahlungen aufzunehmen und so Temperaturen bzw. Temperaturdifferenzen zu messen. Jedes Thermoelement 12 weist einen definierten Erfassungsbereich auf. Aus der Anordnung der Thermoelemente 12 zueinander ergibt sich so ein gerasterter Aufnahmebereich des Infrarot-Arrays 10, so dass die gemessenen Temperaturen den Teilabschnitten des Spritzfächers 9 zugewiesen werden können. Die Temperatur bzw. aus zumindest zwei Temperaturen gebildete Temperaturdifferenzen eignen sich besonders zur Erfassung und Auswertung des Spritzfächers 9, da die Spritzflüssigkeit erfahrungsgemäß eine andere Temperatur aufweist als die Umgebung. Der Spritzfächer 9 setzt sich somit in der Betrachtung durch den Infrarot-Array 10 von der Umgebung ab.

Sollte wider Erwarten der Temperatur-Kontrast zwischen Spritzfächer 9 und Umgebung nicht ausreichend deutlich sein, um eine fehlerfreie Messung zu ermöglichen, ist es in einer Ausführungsform denkbar in Blickrichtung 13 des als Infrarot-Array 10 ausgebildeten Sensors hinter dem als Spritzfächer 9 bezeichneten Ausbringbereich eine Wärmequelle 14 anzuordnen. Eine derartige Anordnung mit optionaler Wärmequelle 14 ist in Fig.3 gezeigt.

Fig.3 zeigt eine Düse 6 mit Spritzfächer 9, einen der Düse 6 zugeordneten Infrarot-Array 10 und die optionale Wärmequelle 14 in Seitenansicht. Die Düse 6 ist nicht dargestellter Weise senkrecht zum Boden sprühend am Spritzgestänge 5 angeordnet, so dass die Hochachse H des Spritzfächers ebenfalls senkrecht zur Bodenoberfläche liegt. Der Infrarot-Array 10 ist quer zur Hochachse H beabstandet, beispielsweise wie hier in Fahrtrichtung F vor dem Spritzfächer 9, mit Blickrichtung 13 auf den Spritzfächer 9 in ebenfalls nicht dargestellter Weise am Spritzgestänge 5 angeordnet. Vorteilhaft ist hierbei, dass der Infrarot-Array 10 nahezu senkrecht zur Hochachse H auf den Spritzfächer 9 blickt, so dass die Messwerte nahezu unverzerrt aufgenommen und untransformiert weiterverarbeitet werden können.

Anhand der aufgenommenen Temperaturmesswerte können Rückschlüsse auf den Zustand der Düse 6 gezogen werden. Die Erfassungseinrichtung 11 übernimmt nicht nur die Erfassung der Messwerte mittels der Infrarot-Arrays 10 sondern auch die Auswertung. Hierzu ist in einem Speicher der Erfassungseinrichtung 11 ein Auswerteprogramm hinterlegt. Anhand des Auswerteprogramms ist die Erfassungseinrichtung 11 dazu eingerichtet, aufgenommene Werte derart auszuwerten, dass der Zustand der jeweiligen Düse 6 festgestellt wird. Diese Erfassung und Auswertung führt die Erfassungseinrichtung 11 für eine Mehrzahl von Düsen 6 am Spritzgestänge 5 durch und nutzt hierbei auch einen Vergleich der Werte von zumindest zwei Düsen 6 untereinander.

Des Weiteren sind in dem Speicherelement der Erfassungseinrichtung 11 unterschiedliche düsentypspezifische Referenzwertemengen in jeweils verschiedenen Zuständen, wie Neuzustand, teilweise verschlissen oder teilweise blockiert, abgelegt. Durch Vergleichen der aufgenommenen Werte mit den Referenzwerten kann auf den Zustand der Düse 6 geschlossen werden. Dieser ergibt sich anhand der größten Ähnlichkeit zwischen tatsächlichen Werten und Referenzwerten.

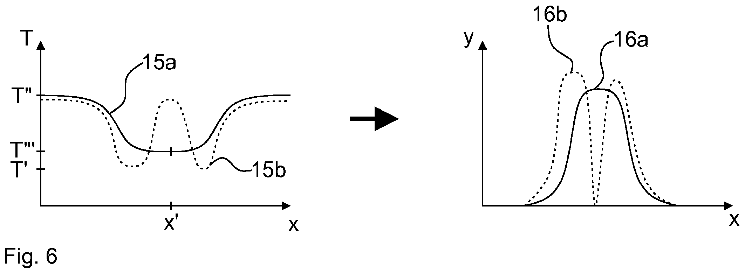

Das erfindungsgemäße Verfahren zur Überwachung von Düsen 6 im Betrieb soll anhand der Fig.4 bis 6 erläutert werden. Fig.4 und 5 zeigen eine Düse 6 mit Spritzfächer 9 und einen in der Zeichenebene hinter bzw. in Fahrtrichtung F vor dem Spritzfächer 9 angeordneten Infrarot-Array 10. Mittels der hier zeilenweise angeordneten Thermoelemente 12 ist der Infrarot-Array 10 dazu eingerichtet über die Breite x des Spritzfächers 9 und die angrenzenden Bereiche ein Temperaturprofil 15a, 15b zu erfassen. Die Fig.6 zeigt hierbei in einem Diagramm, in dem die Temperatur T über die Breite x des Erfassungsbereiches des Infrarot-Arrays 10 aufgetragen ist, das Temperaturprofil 15a der intakten Düse 6 gemäß Fig.4 als durchgezogenen Graph und das Temperaturprofil 15b der teilweise blockierten Düse 6 gemäß Fig.5 als gestrichelten Graph. Da erfahrungsgemäß davon ausgegangen werden kann, dass die Spritzflüssigkeit eine geringere Temperatur T' aufweist als die Umgebungstemperatur T", erfassen die vom Spritzfächer 9 am weitesten entfernten Thermoelemente 12 im Wesentlichen die Umgebungstemperatur T".

In den an den Spritzfächer 9 angrenzenden Bereichen ist zu erwarten, dass die Temperatur T aufgrund von sehr feinem Sprühnebel bereits leicht sinkt. Diese Veränderung wird von den durch den Spritzfächer 9 höchstens teilweise überdeckten Thermoelementen 12, die dem Spritzfächer 9 am nächsten sind, ohne hinter dem Spritzfächer 9 zu liegen, detektiert und spiegelt sich in Form eines allmählich abfallenden Temperaturprofils 15a wieder. Die hinter dem Spritzfächer 9 der Fig.4 liegenden Thermoelemente 12 sehen im Wesentlichen die Temperatur T' der Spritzflüssigkeit. Das Temperaturprofil 15a sinkt in diesem Bereich auf die Temperatur T' der Talsohle, bevor es von der Mitte x' an symmetrisch zum vorstehenden Verlauf wieder auf die Umgebungstemperatur T" ansteigt. Das Temperaturprofil 15a kann somit als charakteristisches Profil für intakte Düsen 6 verwendet werden bzw. entspricht dem erwarteten Profil einer intakten Düse 6.

Die hinter dem Spritzfächer 9 der Fig.5 liegenden Thermoelemente 12 sehen teilweise eine tiefere Temperatur T‴ der Spritzflüssigkeit als die Thermoelemente 12 in Fig.4 und teilweise nahezu die Umgebungstemperatur T", wie das strichlierte Temperaturprofil 15b in Fig.6 zeigt. Dies bedingt sich daher, dass die Düse 6 der Fig.5 teilweise blockiert ist, so dass sich der Spritzfächer 9 in einen linken und einen rechten Strahl aufteilt. Da sich die Flüssigkeitsmenge für diesen defekten Spritzfächer 9 auf eine geringere Breite x verteilt, ist aufgrund der gestiegenen Flüssigkeitsdichte plausibel, dass die Thermoelemente 12 eine niedrigere Temperatur T‴ der Spritzflüssigkeit sehen als im Temperaturprofil 15a. Der Wärmeübergang zwischen Spritzflüssigkeit und Umgebung beansprucht in diesem Fall mehr Zeit, so dass die Flanken des Temperaturprofils 15b steiler verlaufen. Zwischen dem linken und rechten Strahl des Spritzfächers 9, zumindest annährend in der Mitte x', sieht das dahinterliegende Thermoelement 12 annährend die Umgebungstemperatur T". Dies ist erkennbar an dem zwischenzeitlichen Ausschlag nach oben im Temperaturprofil 15b. Mit fortschreitender Breite x nimmt die detektierte Temperatur T aufgrund des rechten Strahls des Spritzfächers 9 nochmal ab, bevor sie wieder zumindest annährend auf Umgebungstemperatur T" ansteigt.

Zur detaillierten Auswertung der erfassten Temperaturprofile 15a, 15b mittels des im Speicher der Erfassungseinrichtung 11 hinterlegten Auswerteprogramms werden Temperaturdifferenzen zwischen jeweils zwei Messwerten gebildet. Durch geschickte Wahl der Messwerte lassen sich Rückschlüsse auf die Ausbringmenge y schließen. Vorzugsweise bildet das Auswerteprogramm die Temperaturdifferenzen zwischen der detektierten Umgebungstemperatur T" und einem weiteren gemessenen Wert über die Breite x in regelmäßigen Abständen fortschreitend. Derart vorgehend können die Temperaturprofile 15a, 15b mittels der gebildeten Temperaturdifferenzen in die Ausbringprofile 16a, 16b durch Aufsummieren umgerechnet werden, was in Fig.6 durch den zentralen Pfeil angedeutet ist.

Zur Analyse der Ausbringprofile 16a, 16b werden diese zumindest auf Unregelmäßigkeiten, wie Sprünge bzw. Lücken, Symmetrie und/oder stetigen Verlauf untersucht. Unregelmäßigkeiten wie Sprünge oder Lücken können hierbei ein Anzeichen für eine Teilblockade oder zumindest teilweise Verstopfung der Düse 6 wie in Fig.5 sein. Ein stetiger Verlauf hingegen kann auf eine zumindest annährend voll funktionstüchtige Düse 6 wie in Fig.4 hindeuten. Die Symmetrie kann je nach Anwendungsfall und Ausprägung entweder ein Indikator für Fehlunktionen oder für ordnungsgemäßen Betrieb sein und ist daher im Einzelfall differenziert zu betrachten.

Durch die Analyse bestimmt die Erfassungseinrichtung 11 so den Zustand der untersuchten Düsen 6. Zur Benachrichtigung des Benutzers werden die Informationen über die Zustände der Düsen 6 auf der Erfassungseinrichtung 11 angezeigt und/oder akustisch mitgeteilt. Die unterschiedlichen Zustände, wie Neuzustand, teilweise verschlissen oder teilweise blockiert können hierbei beispielsweise durch unterschiedliche Farben gekennzeichnet sein. Der Benutzer kann so durch gelegentliche Beobachtung der Zustände der Düsen 6 seine Instandhaltungsmaßnahmen vorrausschauend planen. Hierzu ist er nicht auf zeitintensive manuelle Untersuchungen der Düsen 6 oder komplizierte Auswertung von Diagrammen angewiesen. Der Blick auf die Erfassungseinrichtung 11 genügt, da die Überwachungsvorgänge automatisiert mit Hilfe der Infrarot-Arrays 10 und des im Speicher abgelegten Auswerteprogramms über die Erfassungseinrichtung 11 ablaufen und für den Benutzer in geeigneter Weise zur Verfügung gestellt werden.

### Bezugszeichenliste

- 1: Ackerschlepper
- 2: Pflanzenschutzspritze
- 3: Tank
- 4: Räder
- 5: Spritzgestänge
- 6: Düse
- 7: Segment
- 8: Gelenk
- 9: Spritzfächer
- 10: Infrarot-Array
- 11: Erfassungseinrichtung
- 12: Thermoelement
- 13: Blickrichtung
- 14: Wärmequelle
- H: Hochachse
- 15a, 15b: Temperaturprofil
- T, T', T‴: Temperatur
- T": Umgebungstemperatur
- x: Breite
- x': Mitte
- 16a, 16b: Ausbringprofil

## Patentansprüche

1. Landwirtschaftliche Verteilmaschine (2), insbesondere Pflanzenschutzspritze (2), mit
- zumindest einem Ausbringelement (6), welches an einem Spritzgestänge (5) angeordnet und dazu eingerichtet ist, Spritzflüssigkeit in einem, insbesondere kegelförmigen oder fächerförmigen Ausbringbereich (9) auf eine landwirtschaftliche Nutzfläche auszubringen, wobei dem Ausbringelement (6) zumindest ein Sensor (10) zugeordnet ist, und
- einer mit dem zumindest einen Sensor (10) verbundenen Erfassungseinrichtung (11) zur Erfassung und Auswertung des Ausbringbereichs (9) des Ausbringelementes (6),
wobei der zumindest eine Sensor (10) dazu eingerichtet ist, über die Breite (x) und/oder Tiefe des Ausbringbereichs (9) zumindest zwei Werte einer den Ausbringbereich (9) charakterisierenden Größe aufzunehmen, **dadurch gekennzeichnet, dass** die charakterisierende Größe eine Temperatur (T) oder eine Temperaturdifferenz ist.

2. Landwirtschaftliche Verteilmaschine (2) nach Anspruch 1, **dadurch gekennzeichnet, dass** die zumindest zwei Werte Wärmestrahlungen sind.

3. Landwirtschaftliche Verteilmaschine (2), nach zumindest einem der vorstehenden Ansprüche, **dadurch gekennzeichnet, dass** der zumindest eine Sensor (10) als ein kontaktlos messender Infrarot-Array (10) ausgebildet ist.

4. Landwirtschaftliche Verteilmaschine (2), nach zumindest einem der vorstehenden Ansprüche, **dadurch gekennzeichnet, dass** der zumindest eine Sensor (10) quer zur Hochachse (H) des Ausbringbereichs (9) beabstandet, auf den Ausbringbereich (9) blickend, vorzugsweise an dem Spritzgestänge (5), angeordnet ist.

5. Landwirtschaftliche Verteilmaschine (2) nach zumindest einem der vorstehenden Ansprüche, **dadurch gekennzeichnet, dass** die Erfassungseinrichtung (11) mittels eines in einem Speicher der Erfassungseinrichtung (11) hinterlegten Auswerteprogramms anhand der aufgenommenen Werte dazu eingerichtet ist, den Zustand des den Werten zugeordneten Ausbringelementes (6) festzustellen.

6. Landwirtschaftliche Verteilmaschine (2) nach zumindest einem der vorstehenden Ansprüche, **dadurch gekennzeichnet, dass** in einem Speicherelement der Erfassungseinrichtung (11) zumindest eine, vorzugsweise ausbringelementspezifische, Referenzwertemenge abgelegt ist, dass die Erfassungseinrichtung (11) dazu eingerichtet ist, die zumindest zwei aufgenommenen Werte mit einer abgelegten Referenzwertemenge zu vergleichen und Abweichungen zwischen ermittelten Werten und Referenzwerten zur Feststellung des Zustands des zugeordneten Ausbringelementes (6) auszuwerten.

7. Landwirtschaftliche Verteilmaschine (2) nach Anspruch 6, **dadurch gekennzeichnet, dass** die Referenzwertemenge eine von einem Sensor (10) aufgenommene Wertemenge eines sich an einem Ausbringelement (6) im Neuzustand oder zumindest teilweise verschlissenen Zustand oder zumindest teilweise blockierten Zustand ausbildenden Ausbringbereiches (9) ist.

8. Landwirtschaftliche Verteilmaschine (2) nach zumindest einem der vorstehenden Ansprüche, wobei an dem Spritzgestänge (5) eine Mehrzahl von Ausbringelementen (6) mit zugeordneten Sensoren (10) angeordnet ist, **dadurch gekennzeichnet, dass** die Erfassungseinrichtung (11) dazu eingerichtet ist, die aufgenommenen Werte von zumindest zwei Ausbringelementen (6) zu vergleichen und zur Feststellung des Zustands zumindest eines Ausbringelementes (6) auszuwerten.

9. Landwirtschaftliche Verteilmaschine (2) nach zumindest einem der vorstehenden Ansprüche, **dadurch gekennzeichnet, dass** in Blickrichtung (13) des Sensors (10) hinter dem Ausbringbereich (9) eine Wärmequelle (14) angeordnet ist.

10. Verfahren zur Überwachung von zumindest einem an einer landwirtschaftlichen Verteilmaschine (2) angeordneten Ausbringelement (6) im Betrieb, so dass sich ein Ausbringbereich (9) unter dem Ausbringelement (6) ausbildet, mit den Schritten:
*a*. Erfassen eines Temperaturprofils (15a, 15b) über die Breite (x) des Ausbringbereiches (9) und der an den Ausbringbereich beidseitig zumindest annährend unmittelbar angrenzenden Bereiche, die zumindest annährend die halbe Breite (x) des Ausbringbereiches (9) aufweisen, mittels eines Infrarot-Arrays (10),
*b*. Auswerten des erfassten Temperaturprofils (15a, 15b) mittels eines in einem Speicher einer Erfassungseinrichtung (11) hinterlegten Auswerteprogramms.

11. Verfahren nach Anspruch 10, **dadurch gekennzeichnet, dass** das Auswerten des erfassten Temperaturprofils (15a, 15b) die folgenden Schritte umfasst:
*c.* Bilden von Temperaturdifferenzen aus zwei vom Infrarot-Array (10) erfassten Temperaturmesswerten,
*d.* Umrechnen der gebildeten Temperaturdifferenzen auf jeweils eine zu der jeweiligen Temperaturdifferenz im Zusammenhang stehenden Ausbringmenge (y),
*e.* Summieren der einzelnen Ausbringmengen (y) über den anhand Schritts a erfassten Bereich
*f.* Analysieren der über den Bereich aufsummierten Ausbringmenge (y).

12. Verfahren nach Anspruch 10 und 11, **dadurch gekennzeichnet, dass** das Analysieren der über den Bereich aufsummierten Ausbringmenge (y) zumindest einen der folgenden Schritte umfasst:
*g.* Untersuchen der aufsummierten Ausbringmengen (y) auf Unregelmäßigkeiten, wie Sprünge und/oder Lücken,
*h.* Untersuchen der aufsummierten Ausbringmengen (y) auf Symmetrie,
*i.* Untersuchen der aufsummierten Ausbringmengen (y) auf einen stetigen Verlauf.

13. Verfahren nach Anspruch 10 bis 12, **dadurch gekennzeichnet, dass** die Erfassungseinrichtung (11) einem Benutzer der landwirtschaftlichen Verteilmaschine (2) anhand der Ergebnisse der Untersuchungen den Zustand, wie Neuzustand oder zumindest teilweise verschlissener Zustand oder zumindest teilweise blockierter Zustand, des überwachten Ausbringelementes (6) visuell und/oder akustisch mitteilt.

14. Verfahren nach zumindest einem der vorstehenden Ansprüche, **dadurch gekennzeichnet, dass**
*j.* eine Mehrzahl von Ausbringelementen (6) überwacht wird, und
*k*. die Untersuchungen der Ausbringelemente (6) untereinander verglichen werden.

## Claims

1. Agricultural distribution machine (2), in particular a crop protection sprayer (2), with
- at least one application element (6) which is arranged on a spray boom (5) and is configured to distribute spray liquid in an in particular conical or fan-shaped application region (9) on a cropland area, wherein at least one sensor (10) is associated with the application element (6), and
- a detection device (11), connected with the at least one sensor (10), for capturing and evaluating the application region (9) of the application element (6),
wherein the at least one sensor (10) is configured to acquire over the width (x) and/or depth of the application region (9) at least two values of a variable characterizing the application region (9), **characterized in that** the characterizing variable is a temperature (T) or a temperature difference.

2. Agricultural distribution machine (2) according to Claim 1,
**characterized in that** the at least two values are heat radiation values.

3. Agricultural distribution machine (2) according to at least one of the preceding claims, **characterized in that** the at least one sensor (10) is designed as an infrared array (10) measuring without contact.

4. Agricultural distribution machine (2) according to at least one of the preceding claims, **characterized in that** the at least one sensor (10) is arranged at a distance from and transverse to the height axis (H) of the application region (9), looking toward the application region (9), preferably on the spray boom (5).

5. Agricultural distribution machine (2) according to at least one of the preceding claims, **characterized in that** the detection device (11) is configured, by means of an evaluation program stored in a memory of the detection device (11), to use the acquired values to determine the state of the application element associated with the values (6).

6. Agricultural distribution machine (2) according to at least one of the preceding claims, **characterized in that** at least one reference value set, preferably specific to the application element, is stored in a memory element of the detection device (11), **in that** the detection device (11) is configured to compare the at least two acquired values with a stored reference value set, and to evaluate differences between determined values and reference values in order to determine the state of the associated application element (6).

7. Agricultural distribution machine (2) according to Claim 6,
**characterized in that** the reference value set is a value set, acquired by a sensor (10), of an application region (9) forming at an application element (6) in a new state or at least partially worn state or at least partially blocked state.

8. Agricultural distribution machine (2) according to at least one of the preceding claims, wherein a plurality of application elements (6) with associated sensors (10) is arranged on the spray boom (5), **characterized in that** the detection device (11) is configured to compare the acquired values of at least two application elements (6) and evaluate them in order to determine the state of at least one application element (6).

9. Agricultural distribution machine (2) according to at least one of the preceding claims, **characterized in that** a heat source (14) is arranged behind the application region (9) in the viewing direction (13) of the sensor (10).

10. Method for monitoring at least one application element (6) arranged on an agricultural distribution machine (2) during operation, so that an application region (9) forms below the application element (6), having the steps of:
*a.* detecting by means of an infrared array (10) a temperature profile (15a, 15b) over the width (x) of the application region (9), and of the regions that are at least approximately directly adjacent to the application region on both sides which have at least approximately half of the width (x) of the application region (9),
*b.* evaluating the detected temperature profile (15a, 15b) by means of an evaluation program stored in a memory of a detection device (11).

11. Method according to Claim 10, **characterized in that** the evaluation of the detected temperature profile (15a, 15b) includes the following steps:
*c.* calculating temperature differences from two measured temperature values captured by the infrared array (10),
*d.* converting the calculated temperature differences into a respective distribution quantity (y) correlated with the respective temperature difference,
*e.* summating the individual distribution quantities (y) over the region captured using step a
*f.* analyzing the application quantity summated over the region (y).

12. Method according to Claims 10 and 11, **characterized in that** the analysis of the distribution quantity (y) summated over the region comprises at least one of the following steps:
*g.* examining the summated distribution quantities (y) for irregularities, such as jumps and/or gaps,
*h.* examining the summated distribution quantities (y) for symmetry,
*i.* examining the summated distribution quantities (y) for a continuous curve.

13. Method according to Claims 10 to 12, **characterized in that** the detection device (11), using the results of the examinations, visually and/or acoustically communicates the state of the monitored application element (6), such as a new state or at least partially worn state or at least partially blocked state, to a user of the agricultural distribution machine (2).

14. Method according to at least one of the preceding claims, **characterized in that**
*j.* a plurality of application elements (6) is monitored, and
*k.* the examinations of the application elements (6) are compared with one another.

## Revendications

1. Machine de distribution agricole (2), en particulier pulvérisateur phytosanitaire (2), comportant
- au moins un élément d'épandage (6) disposé sur une perche de pulvérisation (5) et conçu pour épandre du liquide de pulvérisation sur une surface utile agricole dans une zone d'épandage (9), en particulier conique ou en éventail, au moins un capteur (10) étant associé à l'élément d'épandage (6), et
- un dispositif de détection (11) relié à l'au moins un capteur (10) et permettant de détecter et d'évaluer la zone d'épandage (9) de l'élément d'épandage (6),
dans laquelle l'au moins un capteur (10) est configuré pour prendre au moins deux valeurs d'une grandeur caractérisant la zone d'épandage (9) sur la largeur (x) et/ou la profondeur de la zone d'épandage (9), **caractérisée en ce que** la grandeur caractérisante est une température (T) ou une différence de température.

2. Machine de distribution agricole (2) selon la revendication 1,
**caractérisée en ce que** les au moins deux valeurs sont des rayonnements thermiques.

3. Machine de distribution agricole (2) selon au moins l'une des
revendications précédentes, **caractérisée en ce que** l'au moins un capteur (10) est réalisé en tant que réseau infrarouge (10) à mesure sans contact.

4. Machine de distribution agricole (2) selon au moins l'une des
revendications précédentes, **caractérisée en ce que** l'au moins un capteur (10) est disposé à distance de et transversalement à l'axe vertical (H) de la zone d'épandage (9), de préférence sur la perche de pulvérisation (5), en regardant la zone d'épandage (9) du dessus.

5. Machine de distribution agricole (2) selon au moins l'une des
revendications précédentes, **caractérisée en ce que** le dispositif de détection (11) est configuré pour déterminer l'état de l'élément d'épandage (6) associé aux valeurs sur la base des valeurs enregistrées au moyen d'un programme d'évaluation stocké dans une mémoire du dispositif de détection (11).

6. Machine de distribution agricole (2) selon au moins l'une des
revendications précédentes, **caractérisée en ce qu'**au moins une quantité de valeurs de référence, de préférence spécifique à l'élément d'épandage, est stockée dans un élément de mémoire du dispositif de détection (11), **en ce que** le dispositif de détection (11) est configuré pour comparer les au moins deux valeurs enregistrées avec une quantité de valeurs de référence stockée et pour évaluer des écarts entre des valeurs déterminées et des valeurs de référence pour la détermination de l'état de l'élément d'épandage (6) associé.

7. Machine de distribution agricole (2) selon la revendication 6,
**caractérisée en ce que** la quantité de valeurs de référence est une quantité de valeurs enregistrée par un capteur (10) d'une zone d'épandage (9) formée sur un élément d'épandage (6) à l'état neuf ou à l'état au moins partiellement usé ou à l'état au moins partiellement bloqué.

8. Machine de distribution agricole (2) selon au moins l'une des
revendications précédentes, dans laquelle une pluralité d'éléments d'épandage (6) comportant des capteurs (10) associés sont disposés sur la perche de pulvérisation (5), **caractérisée en ce que** le dispositif de détection (11) est configuré pour comparer les valeurs enregistrées d'au moins deux éléments d'épandage (6) et pour les évaluer pour la détermination de l'état d'au moins un élément d'épandage (6).

9. Machine de distribution agricole (2) selon au moins l'une des
revendications précédentes, **caractérisée en ce qu'**une source de chaleur (14) est disposée derrière la zone d'épandage (9) dans la direction de visée (13) du capteur (10).

10. Procédé permettant la surveillance d'au moins un élément d'épandage (6) disposé sur une machine de distribution agricole (2) lors du fonctionnement, de sorte qu'une zone d'épandage (9) se forme sous l'élément d'épandage (6), comportant les étapes de :
*a.* détection d'un profil de température (15a, 15b) sur la largeur (x) de la zone d'épandage (9) et des zones adjacentes à la zone d'épandage au moins approximativement immédiatement des deux côtés, lesquelles présentent au moins approximativement la moitié de la largeur (x) de la zone d'épandage (9), au moyen d'un réseau infrarouge (10),
*b.* évaluation du profil de température (15a, 15b) détecté au moyen d'un programme d'évaluation enregistré dans une mémoire d'un dispositif de détection (11).

11. Procédé selon la revendication 10, **caractérisé en ce que** l'évaluation du profil de température (15a, 15b) détecté comprend les étapes suivantes :
*c.* formation de différences de température à partir de deux valeurs de mesure de température détectées par le réseau infrarouge (10),
*d.* conversion des différences de température formées en respectivement une quantité d'épandage (y) liée à la différence de température respective,
*e.* addition des quantités d'épandage (y) individuelles sur la zone détectée à l'étape a
*f.* analyse de la quantité d'épandage (y) additionnée sur la zone.

12. Procédé selon les revendications 10 et 11, **caractérisé en ce que** l'analyse de la quantité d'épandage (y) additionnée sur la zone comprend au moins l'une des étapes suivantes :
*g.* examen des quantités d'épandage (y) additionnées pour déceler des irrégularités telles que des fissures et/ou des creux,
*h.* examen des quantités d'épandage (y) additionnées pour déceler une symétrie,
*i.* examen des quantités d'épandage (y) additionnées pour déceler une continuité régulière.

13. Procédé selon les revendications 10 à 12, **caractérisé en ce que** le dispositif de détection (11) communique visuellement et/ou acoustiquement à un utilisateur de la machine de distribution agricole (2), sur la base des résultats des examens, l'état, tel que l'état neuf ou l'état au moins partiellement usé ou l'état au moins partiellement bloqué, de l'élément d'épandage (6) surveillé.

14. Procédé selon au moins l'une des revendications précédentes, **caractérisé en ce que**
*j.* une pluralité d'éléments d'épandage (6) sont surveillés, et
*k.* les examens des éléments d'épandage (6) sont comparés entre eux.
